Europäisches Patentamt

European Patent Office

Office européen des brevets

(11) Publication number: **0 077 351**
**B1**

## EUROPEAN PATENT SPECIFICATION

(45) Date of publication of patent specification: **30.01.85**

(51) Int. Cl.⁴: **H 04 B 1/58**

(21) Application number: **82901176.6**

(22) Date of filing: **06.04.82**

(86) International application number:
**PCT/SE82/00112**

(87) International publication number:
**WO 82/03738 28.10.82 Gazette 82/26**

(54) DIRECT CURRENT MAGNETIZED HYBRID TRANSFORMER.

(30) Priority: **24.04.81 SE 8102610**

(43) Date of publication of application:
**27.04.83 Bulletin 83/17**

(45) Publication of the grant of the patent:
**30.01.85 Bulletin 85/05**

(84) Designated Contracting States:
**DE FR GB NL**

(56) References cited:
**DE-A-2 450 853**
**DE-A-2 919 652**
**US-A-3 778 563**
**US-A-3 875 350**
**US-A-3 987 257**

(73) Proprietor: **TELEFONAKTIEBOLAGET L M ERICSSON**
**S-126 25 Stockholm (SE)**

(72) Inventor: **JAKI, Ivan**
**Storskiftesvägen 142**
**S-145 60 Norsborg (SE)**

(74) Representative: **Wennerholm, Kristian et al**
**TELEFONAKTIEBOLAGET L M ERICSSON**
**S-126 25 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

### Technical field

The present invention relates to a direct current magnetized hybrid transformer included in a telephone repeater and connected between a two-wire line and the repeater to provide a transfer between the two-wire and four-wire circuits in the repeater. More fully, the invention relates to a hybrid transformer in repeaters, used to transform the analogue telephone signals coming from the line, into PCM-coded signals and vice versa.

### Background art

When converting analogue telephone signals from a certain subscriber across a certain line, repeaters are used to provide two different signal paths. In one of these paths the analogue signals are coded to the PCM-coded signals and in the other a decoding of the digital PCM-coded signal flow is carried out. Furthermore, amplifiers are connected to compensate for the attenuation of the line. It is previously known to use a direct current magnetized hybrid transformer when dividing the input of the repeater towards the two-wire line, the transformer giving the desired current feeding to the subscriber's set connected to the line. At the same time, however a DC-magnetizing of the transformer core is obtained.

An example of a hybrid transformer known in the art is shown in the US—A—3.778.563. This patent shows a repeater in two-wire telephone systems including a hybrid set in the two directions of transmission. Each set comprises a hybrid transformer including two primary windings, two ends of which are connected by means of a capacitor to decouple the alternating current from the two directions. Inductors are coupled to the midpoints of the hybrid transformer secondary windings and to ground in order to allow the hybrid sets to be of small size and inductance, and prevent low frequency signals from the amplifier in one direction to enter the amplifier in the other direction.

Another example of known prior art is shown in DE—A—2.919.652. This shows a hybrid circuit for a two wire-four wire connection including a transformer which has primary windings connected via chokes to a voltage source (a capacitor charged by a supply voltage source). The secondary windings of the transformer are part of an adjustable push-pull circuit to create an adjustable balance in the hybrid.

### Disclosure of the invention

When constructing transformer hybrids included in repeaters, certain demands are put regarding the design of the hybrid and consideration must be taken to the DC-magnetizing of the transformer. Firstly the input terminals towards the two-wire side should be balanced to an earth point, since otherwise the so called longitudinal currents arise across the line. Secondly a balance impedance should be connected to the transformer so that the impedance as seen out from the hybrid towards the two-wire side can be balanced out, i.e. impedance match is to be achieved to the incoming line. Finally the echo attenuation on the two-wire side has to be high for impedances, i.e. line and subscriber's set impedances, which are connected to the two-wire side of the hybrid. Otherwise reflections arise across the line between the hybrid and the subscriber's set.

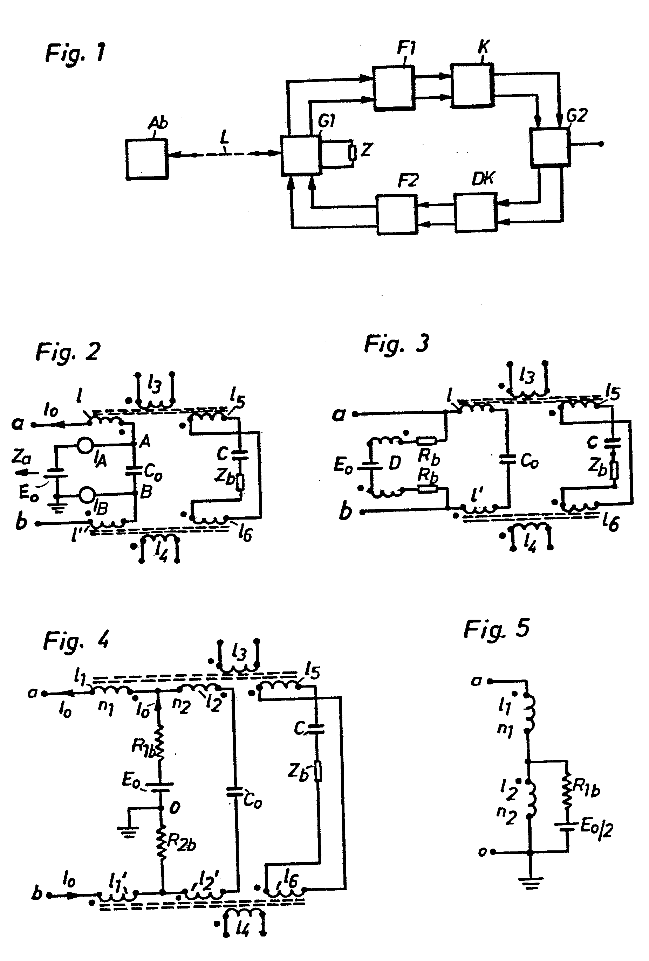

Besides there will be problems with a DC-magnetized hybrid transformer to prevent incoming speech voltage being short-circuited via the current loop through which direct current is supplied from the battery towards the line. Current supply has previously been carried out via current transformers with high output impedance or a choke has been connected in series with the direct current source, see the attached Figures 2 and 3. Especially for a DC-magnetized hybrid transformer certain demands have to be made on the core material, i.e. in order to obtain the desired inductance, the direct current should have a certain value for obtaining the transformer function.

In accordance with the invention the above mentioned problem is solved by dividing the two primary windings at the line side of the hybrid into two winding parts each, and by connecting the feeding voltage source which primarily will supply the subscriber with direct current to the common connection point between the two winding parts. The present invention is based on the prior art shown, for example, in the above cited DE—A—2.919.652 and is characterized as it appears from the characterizing part of the claim.

### Brief description of drawings

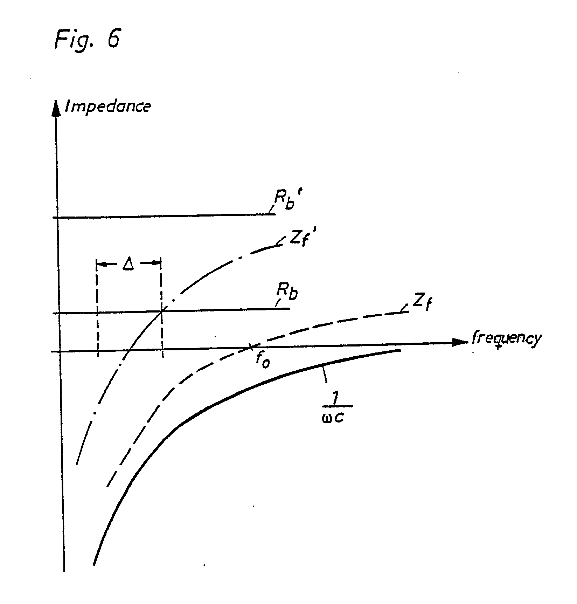

The invention will be more fully described in the light of prior art with reference to the accompanying drawings, where Figure 1 shows a block diagram of a telephone repeater and its connection to a subscriber via a two-wire line, Figures 2 and 3 show two different embodiments of a hybrid transformer of known kind, Figure 4 shows a circuit diagram of a hybrid transformer according to the invention, Figure 5 shows a simplified circuit diagram of one input side of the transformer according to Figure 4, Figure 6 shows an impedance diagram.

### Mode for carrying out the invention

The block diagram according to Figure 1 shows an over-all diagram of a repeater in which the hybrid transformer according to the invention is used. A subscriber unit Ab is via a line connected to a hybrid circuit G1, the function of which is to couple the incoming two-wire line L to a four-wire line. To the hybrid connection G1 a balance impedance Z is connected in order to simulate the impedance of the subscriber unit Ab and the line L seen from the two-wire side of the hybrid circuit. The four-wire line is divided into a first signal path, which contains a bandpass filter F1 for the speech band (for example 0.2—3.4 kHz) and a PCM-coder K for converting the analogue signals from the subscriber unit Ab to a PCM-bit flow which is transmitted across the output of the repeater via the hybrid circuit G2. Incoming PCM-coded signals to the repeater are converted in the decoder DK in the second signal path to corresponding analogue signals and transmitted via a lowpass filter and eventually via an amplifier, not shown, to the hybrid circuit G1.

Figures 2 and 3 show a circuit diagram of previously known constructions of the hybrid circuit G1, in Figure 1. In the construction according to Figure 2, (c.f. US—A—3.778.563) the two windings I and I' of the hybrid transformer are fed from a voltage source $E_o$ connected to each of the winding end points via two current transformers $I_A$ and $I_B$ so that a direct current I is flowing through each of the windings I, I'. Hereby it is primarily obtained current feeding to the subscriber unit Ab and simultaneously the windings I and I' are pre-magnetizied to a certain value. One pole of the supply voltage source is earthed, the two-wire input to the line L then being balanced relative earth. In a second alternative according to Figure 3, (c.f. DE—A—2.919.652) the supply voltage source $E_o$ is connected in series between two similar windings of a choke D. Two current limiting resistances are designated $R_b$. The circuit according to Figure 2 is considered to be expensive, especially when high demands of balance towards earth is required. The circuit according to Figure 3 is more advantageous and simpler to dimension. However, the choke D requires here a large volume when being designed with passive components. The embodiment according to Figure 3 cannot at all be used when the mechanical construction of the printed card requires limited height (usually ca 13.5 mm) just depending on the choke D.

Reference signs $I_3$ and $I_4$ represent the secondary windings in the hybrid transformer forming the inductive coupling from the four-wire to the two-wire side. Further secondary windings $I_5$ and $I_6$ form the inductive coupling in the hybrid transformer between the balance impedance $Z_b$ to the two-wire line which has the characteristic impedance $Z_a$. A decoupling capacitor C is connected in series with the balance impedance $Z_b$.

In Figure 4 an embodiment is shown of the hybrid transformer according to the invention. The primary winding I according to Figures 2 and 3 connected to the two-wire line L with one end point has been divided into two parts $I_1$ and $I_2$ with respective winding turns $n_1$ and $n_2$. In the same way the primary winding I' according to Figures 2 and 3 has been divided in two parts $I_1'$ and $I_2'$ with the same number of turns $n_1$ and $n_2$.

The connecting points between the two winding parts $I_1$, $I_2$ and $I_1'$ $I_2'$, respectively are connected to the supply voltage source $E_o$, the inner resistance of which has been symbolized by the resistances $R_{1b}$ and $R_{2b}$, since its positive pole is earthed according to the Figure. The resistance $R_{1b}$ should be$=R_{2b}$ to fulfil the requirement of symmetry relative earth in the two-wire input terminals to the line. The end points of the two windings $I_2$, $I_2'$, as well as of the known hybrid circuits according to Figures 2 and 3, are connected to a common coupling capacitor $C_o$. The feeding direct current $I_o$ will then according to Figure 4 flow from the supply voltage source $E_o$ through the resistance $R_{1b}$, one winding $I_1$, the line L, the subscriber unit Ab, the line L, the second winding $L_1'$ and through the resistance $R_{2b}$ back to the voltage source $E_o$.

The inner resistance $R_{1b}$ connected to one terminal a of the line side of the hybrid transformer will be transformed to a higher value through the dividing of the primary winding into the part windings $I_1$ and $I_2$

$$R_{1b}' = \left( \frac{n_1 + n_2}{n_2} \right)^2 \times R_{1b}$$

as is shown in Figure 5. The influence of the coupling capacitor $C_o$ on the speech currents will be neglected. According to this Figure, the primary winding will form an autotransformer on account of the two winding halves $I_1$ and $I_2$ being magnetically coupled. The earth point 0 in Figure 5 corresponds to the earth point 0 in Figure 4. According to known principles for an autotransformer the following is valid for the resistance $R_{1b}$ as seen from the terminals a-0

$$\frac{R_{1b}'}{R_{1b}} = \left( \frac{n_1 + n_2}{n_1} \right)^2,$$

i.e.

$$R_{1b}' = R_{1b} \left( \frac{n_1 + n_2}{n_1} \right)^2$$

according to above.

The same is valid for the two winding parts $I_1$ and $I_2$ at the input terminal b relative earth 0. The inner resistance $R_{1b}$, $R_{2b}$ of the supply voltage source, as seen from the two input terminals a and b has thus been transformed by a factor.

$$\left( \frac{n_1 + n_2}{n_1} \right)^2$$

Should, for example $n_1 = n_2$ be chosen a four-folding of the resistance values $R_{1b}$ and $R_{2b}$ respectively will be obtained. As a consequence the choke D according to Figure 3 can be saved.

According to the circuit diagram in Figure 4, the premagnetizing current $I_o$ only flows through part of the primary winding ($I_1$ and $I_1'$ respectively) of the hybrid transformer. Therefore, the direct current premagnetization is lowered with a factor $(n_1/n_1+n_2)$ since, the inductance of the primary winding is proportional to the square of the number of turns n. Due to this, the cross sectional area of the transformer core, for example, can be reduced, since the premagnetization of the core is inversely proportional to the cross sectional area $A_{fe}$ of the core

$$\text{(premagnetization} \sim \frac{L \times I_o^2}{A_{fe}},$$

where L=inductance of the primary winding).

Alternatively a core material can be used which maintains a higher inductance for a smaller premagnetization current.

An additional advantage is that an improved filtering of noise tones from the voltage source can be obtained by the proposed circuit. As seen from the feeding voltage source the respective resistance $R_{1b}$, $R_{2b}$, lies in series with the coupling capacitor $C_o$. In the diagram according to Figure 6, the impedance $Z_f$ of the filter created by the respective resistance $R_{1b}$, $R_{2b}$ and the capacitor $C_o$ is shown. The dashed line shows the impedance characteristic as the sum of the resistance value, for example $R_{1b}$, and the reactance $1/\omega C_o$ of the capacity $C_o$. The impedance $Z_f$ for this lower value $R_{1b}$ has the zero crossing (is resistive) at a frequency $f_o$ which generally is considerably higher than the speech band. Thus the filter $R_{1b}$, winding $I_2$, capacitor $C_o$ gives a relatively poor filtering of the noise tones from the voltage source $E_o$ lying within the speech band. When transforming the resistance $R_{1b}$ to a higher value, the filter impedance $Z_f$ will instead get its zero crossing within the speech band for which reason the noise tones can be coupled by the filter and do not reach the line or any of the four wire paths of the repeater via the windings $I_3$ and $I_4$.

In the above embodiment of the invention it is assumed that the line impedance has a susceptive character, the balance impedance $Z_b$ having likewise a susceptive character. The proposed hybrid can naturally be used for lines with inductive or resistive character.

## Claim

A direct current magnetized hybrid transformer included, for example, in a telephone line repeater to provide a two wire-four wire coupling in the repeater, containing a first primary winding ($I_1$, $I_2$) magnetically coupled to a first pair of secondary windings ($I_3$, $I_5$) and a second primary winding ($I_1'$, $I_2'$) magnetically coupled to a second pair of secondary windings

($I_4$, $I_6$), the secondary winding pairs then on the one hand creating a four-wire path and on the other hand being connected to a balance impedance ($Z_b$) matched to the line impedance, a current supply source ($E_o$) being connected to the first and second primary windings to provide current supply to the telephone line, characterized in that the said first and second primary windings ($I_1$, $I_2$ and $I_1'$, $I_2'$ respectively) are each divided into two winding parts so that the number of turns ($n_1$) of one winding part ($I_1$, $I_1'$) is in a determined relation to the number of turns ($n_2$) of the second winding part ($I_2$, $I_2'$) and that the supply source ($E_o$) is connected to the connection point common to the winding parts, to magnetize only one winding part ($I_1$, $I_1'$) of the respective first and second primary windings.

## Revendication

Un transformateur différentiel magnétisé en courant continu incorporé par exemple dans un répéteur pour une ligne téléphonique, de façon à réaliser dans le répéteur un couplage deux fils—quatre fils, contenant un premier enroulement primaire ($I_1$, $I_2$) en couplage magnétique avec une première paire d'enroulements secondaires ($I_3$, $I_5$), et un second enroulement primaire ($I_1'$, $I_2'$) en couplage magnétique avec une seconde paire d'enroulements secondaires ($I_4$, $I_6$), les paires d'enroulements secondaires d'une part établissant une voie quadrifilaire et d'autre part étant connectées à une impédance d'équilibrage ($Z_b$) adaptée à l'impédance de ligne, une source d'alimentation en courant ($E_o$) étant connectée aux premier et second enroulements primaires pour alimenter en courant la ligne téléphonique, caractérisé en ce que chacun des premier et second enroulements primaires (respectivement $I_1$, $I_2$ et $I_1'$, $I_2'$) est divisé en deux parties d'enroulement, de façon que le nombre de spires ($n_1$) d'une partie d'enroulement ($I_1$, $I_1'$) soit dans une relation déterminée avec le nombre de spires ($n_2$) de la seconde partie d'enroulement ($I_2$, $I_2'$), et de façon que la source d'alimentation ($E_o$) soit connectée au point de connexion commun aux parties d'enroulement, pour magnétiser seulement une partie d'enroulement ($I_1$, $I_1'$) des premier et second enroulements primaires respectifs.

## Patentansprüch

Gleichstrommagnetisierter Gabelübertrager, der z. B. in einem Fernsprechleitungsverstärker vorgesehen ist, um in dem Verstärker eine Zweidraht-Vierdraht-Kopplung zu schaffen, enthaltend eine erste Primärwicklung ($I_1$, $I_2$), die magnetisch mit einem ersten Paar von Sekundärwicklungen ($I_3$, $I_5$) gekoppelt sind und eine zweite Primärwicklung ($I_1'$, $I_2'$), die magnetisch mit einem zweiten Paar von Sekundärwickl-

ungen ($I_4$, $I_6$) gekoppelt sind, wobei die Sekundärwicklungspaare dann auf der einen Seite einen Vier-Draht-Pfad schaffen und auf der anderen Seite mit einer Ausgleichsimpedanz ($Z_b$) verbunden sind, die an die Leitungsimpedanz angepaßt ist, mit einer Stromversorgungsquelle ($E_0$), die mit der ersten und zweiten Primärwicklung verbunden ist, um eine Stromversorgung für die Fernsprechleitung zu liefern, dadurch gekennzeichnet, daß die erste und zweite Primärwicklung ($I_1$, $I_2$ und $I_1'$, $I_2'$)

jeweils unterteilt ist in zwei Wicklungsteile, so daß die Anzahl der Windungen ($n_1$) des einen Wicklungsteiles ($I_1$, $I_1'$) sich in einer bestimmten Beziehung zur Anzahl der Windungen ($n_2$) des zweiten Wicklungsteiles ($I_2$, $I_2'$) befindet und daß die Versorgunguquelle ($E_0$) mit dem für die Wicklungsteile gemeinsamen Verbindungspunkt verbunden ist, um nur einen Wicklungsteil ($I_1$, $I_1'$) der jeweils ersten und zweiten Primärwicklung zu magnetisieren.

Fig. 1

Fig. 2

Fig. 3

Fig. 4

Fig. 5

Fig. 6